# EUROPÄISCHE PATENTSCHRIFT

(11) **EP 1 846 312 B1**
(45) Veröffentlichungstag und Bekanntmachung des Hinweises auf die Patenterteilung: **29.08.2012**
(21) Anmeldenummer: 05821658.1
(22) Anmeldetag: 13.12.2005
(51) Int. Cl.: B65G 65/48, B23Q 11/00

(54) **SAMMELBEHÄLTER MIT AUSTRAGVORRICHTUNG UND RÄUMER FÜR TROCKENE SCHÜTTGÜTER ODER FLÜSSIGE MEDIEN MIT FESTSTOFFANTEIL**
RECEPTACLE COMPRISING A DISCHARGE DEVICE AND A SCRAPER FOR DRY BULK GOODS OR LIQUID MEDIA WITH A SOLIDS CONTENT
RECIPIENT DE COLLECTE AVEC DISPOSITIF DE VIDANGE ET RACLEUR POUR MATIERES SECHES EN VRAC OU SUBSTANCES LIQUIDES COMPORTANT DES MATIERES SOLIDES

(30) Priorität: 13.12.2004 DE 202004019263 U
(43) Veröffentlichungstag der Anmeldung: 24.10.2007
(73) Patentinhaber: Norbert Ruez, 88427 Bad Schussenried (DE)
(72) Erfinder: WILKES, Stefan, 88427 Bad Schussenried (DE)
(74) Vertreter: König, Beate
(86) Internationale Anmeldenummer: PCT/EP2005/013389
(87) Internationale Veröffentlichungsnummer: WO 2006/063799

(56) Entgegenhaltungen:
- EP-A- 0 434 995
- AU-B2- 560 171
- DE-A1- 3 611 606
- PATENT ABSTRACTS OF JAPAN Bd. 008, Nr. 026 (M-273), 3. Februar 1984 (1984-02-03) -& JP 58 183531 A (HITACHI KINZOKU KK), 26. Oktober 1983 (1983-10-26)

## Beschreibung

Die vorliegende Erfindung betrifft einen Sammelbehälter für trockene Schüttgüter oder flüssige Medien mit Feststoffanteil, umfassend einen Behälterboden und eine Behälterwand, eine Einrichtung für den Feststoffaustrag sowie einen Räumer mit zumindest einem Räumerarm, der den Feststoff der Austrageinrichtung zuführt und entlang der Behälterwand verfahrbar ist.

Bei einem derartigen für Schüttgut vorgesehenen Sammelbehälter gemäß DE 201 09 330 U1 ist für den Abtransport des Schüttguts eine Transportpumpe vorgesehen. Der Räumer ist an einem Zugmittel entlang der Behälterwand verfahrbar, das beispielsweise in Form von Kettenrädern oder Seilen mit entsprechenden Umlenkrollen ausgeführt ist. Der im vorzugsweise im wesentlichen als flacher Steg ausgebildete Räumerarm ist in Bewegungsrichtung V-förmig, kann auch U-förmig sein. Im Bereich der zusammenlaufenden Schenkelenden des Räumerarms sowie an dem der Behälterwand näherliegenden Schenkelende ist jeweils ein Befestigungspunkt zur Verbindung mit dem Zugmittel vorgesehen, wobei die erstere Verbindung nicht direkt, sondern über ein flexibles Verbindungsmittel erfolgen kann. Indessen kommt es aufgrund der Zweipunktlagerung und der starren Räumerarmkonstruktion leicht zu einem Verkanten und Verhaken bei eventuell großen Schüttgutanhäufungen auf dem Behälterboden, und der Räumerarm kann aus seiner Arbeitsebene abgehoben werden.

Aus der DE 102 19 454 C1 und der EP 0 750 966 B1 sind zylindrische Sammelbehälter mit einer Pumpe für den Feststoffaustrag bekannt, die mit einem um die senkrechte Sammelbehälterachse rotierenden Räumer ausgestattet sind. Die Räumerarme sind starr und mit Spiralform oder mehreren Krümmungsbereichen ausgebildet und schieben den Feststoff zur Pumpe hin. Für andere Behälterformen und eine nicht-zentrale Pumpenanordnung sind diese Konstruktionen nicht geeignet.

Aus der DE 36 11 606 A1 ist ein Sammelbehälter mit einem aus einer Kette bestehenden Räumerarm bekannt, der mit einem Ende in der Behältermitte und mit dem anderen Ende an einer an der Behälteraußenwand umlaufenden Antriebskette befestigt ist. Der Räumerarm zieht Schüttgut im Behälter in die Mitte und führt dieses dort der Entnahmeöffnung zu.

Aus der AU 22145183 B ist eine Rückpumpstation mit zentraler Absaugung und mehreren Räumerarmen bekannt, die an einer zentralen Nabe befestigt sind. Die Räumerarme sind mittels an der zentralen Nabe befestigter Arme fixiert und werden mittels flexibler Fortsätze entlang der Wand der Rückpumpstation verfahren.

Der Erfindung liegt die Aufgabe zugrunde, einen Sammelbehälter für trockene Schüttgüter oder flüssige Medien mit Feststoffanteil zu schaffen, der beliebige Gestalt aufweisen kann und die Ablagerung von Feststoff am Behälterboden verhindert oder beseitigt.

Diese Aufgabe ist erfindungsgemäß bei einem Sammelbehälter mit den Merkmalen des Anspruchs 1 gelöst. Vorteilhafte Weiterbildungen des erfindungsgemäßen Sammelbehälters sind Gegenstand der Unteransprüche.

Eine erfindungsgemäße Sammelbehälter für trockene Schüttgüter oder flüssige Medien mit Feststoffanteil umfasst somit einen Behälterboden (und eine Behälterwand eine Einrichtung für den Feststoffaustrag 180) sowie einen Räumer (160) mit zumindest einem Räumerarm, der den Feststoff der Austrageinrichtung 180) zuführt und entlang der Behälterwand verfahrbar ist. Der zumindest eine Räumerarm ist flexble und an einem zugmittel befestigt sowie an dem der Behälterwand entgegengesetzten Ende innerhalb des Behälters drehbar gelagert. Die Austrageinrichtung sind eine oder mehrere Pumpen, die außerhalb des Drehlagers vorgesehen sind, wobei die Pumpe oder Pumpen entweder bis etwa zur Höhe des zumindest einen Räumerarms hinabreichen oder die Pumpe in einer Vertiefung des Behälterbodens versenkt ansaugt. über seine Längserstreckung weist er eine unterschiedliche Steifigkeit auf, derart, dass die Wölbung des Räumerarms beeinflusst und dadurch der Ort des Schüttgut- bzw. Feststofftransports festgelegt ist.

Es ist möglich, den Räumerarm an einer beliebig geformten Wand, auch mit Unterbrechungen der geraden Linie, Aussparungen (z.B. wegen Stützfüßen), etc., d.h. flexibel an die Behältergeometrie angepaßt, den Räumerarm entlang der Behälterwand zu führen. Dabei kann der Räumerarm durchaus in größerer Entfernung der jeweiligen Wandstelle von dem innerhalb des Behälters gelegenen Lager- bzw. Drehpunkt mehr gestreckt und bei geringerer Entfernung weniger gestreckt sein, d.h. der Räumerarm selbst kann zum Ausgleich der unregelmäßigen Behältergeometrie eingesetzt werden. Zum anderen ermöglicht es der Räumerarm, in dem Fall eines Hängenbleibens an größeren Feststoffrückständen, daß er selbst zunächst sich ausdehnen bzw. auslenken läßt, wodurch Verkantungen und Hängenbleiben verhindert werden können.

Bei der Ausführung des Sammelbehälters als Rückpumpstation, vielfach für Kühlmittel und Späne, dosiert der Räumer zusätzlich zu seiner Aufgabe des Verhinderns von Ablagerungen die der Pumpe zuzuführenden Feststoffmengen. Ferner räumt er auch eventuell am Absaugstutzen der Pumpe hängende Feststoffknäuel fort, zu deren Bildung es bei Metallspänen leicht kommen kann.

Wenn in einer Rückpumpstation die Pumpe in einer Vertiefung versenkt ansaugt, wird der flexible Räumerarm nicht mehr unter dem Pumpenstutzen durchlaufen, sondern es wird eher bezweckt, daß er den Feststoff in die Vertiefung einbringt. Vorzugsweise ist der Räumerarm in Vorwärts- und in Rückwärtsrichtung antreibbar ausgeführt. Ist er bis zur Vertiefung hingelaufen, bewirkt dann eine Richtungsumkehr des Antriebs, daß er sich zunächst noch weiter bis über die Vertiefung in der bisherigen Bewegungsrichtung ausbaucht unter Einschieben der Feststoffpartikel in die Vertiefung, bis auch der ausgebauchte Bereich in die andere Richtung läuft. Bei einem Sammelbehälter mit Auslaßöffnung für den Feststoffaustrag kann dieser bei der Richtungsumkehr auftretende Effekt ebenfalls genutzt werden.

Es können eine oder mehrere Pumpen (z.B. eine Reservepumpe) im Sammelbehälter angeordnet werden. Es kann bedarfsweise ein Zerkleinerer innerhalb oder außerhalb des Behälters eingebracht werden. Dabei ist auch eine Anordnung des Zerkleinerers in Höhe des Räumerarms möglich. Der Zerkleinerer ist dann auf oder nahe dem Behälterboden angeordnet und führt den zerkleinerten Feststoff der Austrageinrichtung zu, wobei der Räumerarm den Feststoff zu dem Zerkleinerer hin schiebt und dann aufgrund seiner Flexibilität an diesem vorbei oder um diesen herum (oben, unten, seitlich), ggf. zum Zerreißen des Feststoffaustrags bei entsprechender Konsistenz desselben durch den Zerkleinerer hindurch laufen kann und anschließend über den Boden läuft.

Je nach den Erfordernissen (Flüssigkeit, Art und Mengenanteil der Späne, Behältergeometrie) wird die Zahl der eingesetzten Räumerarme gewählt. Die Erfindung ist nicht auf die Verwendung nur eines Räumerarms beschränkt, auch wenn in den Ausführungsbeispielen und der Beschreibung konkret nur auf einen Räumerarm Bezug genommen wird.

Der Räumerarm ist an einem Zugmittel, vorzugsweise, aber nicht hierauf eingeschränkt an einem Seil oder einer Kette, befestigt. Für das Zugmittel kann eine Spannvorrichtung vorgesehen sein. So kann beispielsweise ein Längerwerden der Kette durch die Spannvorrichtung ausgeglichen werden. Zu diesem Zweck kann an einem Kettenabschnitt ein Spannmittel von der Behältermitte aus gesehen nach außen laufen, wobei das äußere Ende des flexiblen Räumerarms dann entsprechend in diesem Abschnitt weiter auswärts gelenkt wird, was automatisch durch die flexible Gestalt des Räumerarms ausgeglichen wird.

Obwohl die Lagerung des inneren Endes des flexiblen Räumerarms vielfach in der Mitte oder im mittleren Bereich des Sammelbehälters vorgesehen wird, kann außer der mittigen Anordnung auch eine außermittige Anordnung von Vorteil sein. Im letzteren Fall kann dann an bestimmten Stellen des Behälterbodens erreicht werden, daß dort der flexible Räumerarm gestrafft oder mit Spannung hinüberläuft. Dies ist z.B. nützlich, wenn der flexible Räumerarm aufwärts bzgl. der Vertikalen laufen soll.

Die Ausgestaltung des flexiblen Räumerarms kann vorgesehen sein durch flexibel miteinander verbundene Elemente, beispielsweise in Form schmaler Scharniersegmente oder einer Kette oder dergleichen. Der Räumerarm kann auch aus einem Element, vorzugsweise flexiblen Strangkörper bestehen, beispielsweise einem Schlauch, einem Seil, etc.. Wichtig ist die Eigenschaft, daß er seine Gestalt ändern kann, auch, daß er aus der lose gebogenen Gestalt heraus längergezogen werden kann, wenn der Abstand zwischen dem Anlenkpunkt an der Behälterwand und dem Lagerpunkt in der Behältermitte größer wird.

Der Räumerarm kann flexibel nach oben und nach unten ausgelenkt werden und somit z.B. einen Zerkleinerer beschicken.

Der Räumerarm kann wie erwähnt an Vorwölbungen und auch an den Kettenumlenkungen und dergleichen vorbeigeführt werden, wobei die Kettenumlenkungen selbstverständlich einen Schutz gegen Schüttgüter oder Späne aufweisen. Der Lagerpunkt des Räumerarms in der Behältermitte kann verschiedenartig ausgestaltet sein. Vorzugsweise erstreckt er sich von oben oder von unten zum Räumerarm hin als ein sich um ein Rohr mit drehender Zylinder. Ebenso sind Ösen- oder Schraubverbindungen denkbar.

Bei einer Ausführung des Sammelbehälters, vielfach für Kühlmittel und Späne, als Austragkonstruktion ist die Einrichtung für den Feststoffaustrag eine Auslaßöffnung, durch die der auszutragende Feststoff abtransportiert wird. Der flexible Räumerarm kann über diese Auslaßöffnung laufen, wobei diese aufgrund ihrer Lage im Behälterboden vorteilhaft mit einem Stabilisierungsmittel, insbesondere einem Steg, einem Lochblech oder einem Rost, versehen ist. Über diese Stabilisierungsmittel läuft dann der flexible Räumer und hängt nicht durch. Die Formgebung des Durchlaßbereichs des Stabilisierungsmittels kann beliebig sein. Zum Schutz beispielsweise einer nachgeschalteten Absaugvorrichtung wird sie so gewählt, daß gröbere Anteile zurückgehalten werden, während die auszutragenden Feststoffpartikel durchgelassen werden.

Wie die obenstehenden Ausführungen erkennen lassen, ist es aufgrund der erfindungsgemäßen Ausgestaltung des Räumerarms auch möglich, diesen in einen Sammelbehälter mit in bezug auf die Vertikale Abschrägungen, mehrere Gefälle gewölbtem oder in anderer Weise nicht ebenem Boden einzusetzen. Der Boden kann auch über die Fläche unterschiedlich gewölbt sein. Auch in diesen Fällen ermöglicht der erfindungsgemäße Räumer ein Zusammenräumen der Feststoffrückstände und -ansammlungen auf dem Boden und verhindert die Feststoffablagerung. Er wird zweckmäßig entsprechend flexibel bzw. mit entsprechend flexiblen Mitnehmerelementen ausgestattet.

Die Erfindung wird im folgenden weiter anhand eines Ausführungsbeispiels und der Zeichnung beschrieben, wobei diese Darstellung ebensowenig wie die Zusammenfassung von Merkmalen in den Unteransprüchen die Erfindung beschränken soll, sondern lediglich zu Erläuterungszwecken dient. In der Zeichnung zeigen:
- Fig. 1: eine Draufsicht auf einen nicht zur Erfindung gehörigen Sammelbehälter, der als Austragkonstruktion ausgeführt ist,
- Fig. 2: eine Vorderansicht des Sammelbehälters von Fig. 1,
- Fig. 3: eine Draufsicht des erfindungsgemäßen Sammelbehälters, der als Rückpumpstation ausgeführt ist, und
- Fig. 4: eine Vorderansicht des Sammelbehälters von Fig. 3.

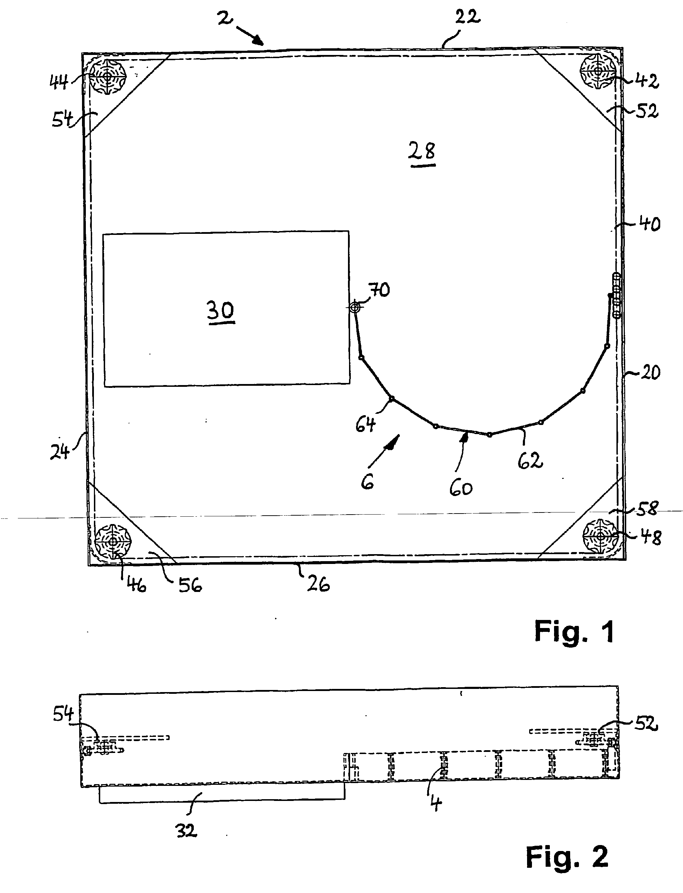

Es wird zunächst auf den in Fig. 1 und 2 dargestellten Sammelbehälter Bezug genommen. Der dargestellte Sammelbehälter 2 ist bei diesem Ausführungsbeispiel rechteckförmig mit ansonsten geradlinig verlaufenden Behälterwänden 20, 22, 24, 26 und einem Behälterboden 28. Der Sammelbehälter 2 ist als Austragbehälter ausgeführt und weist bei der Darstellung von Fig. 1 und 2 im linken Bereich eine Auslaßöffnung 30 auf, die für den Auslaß von in dem Sammelbehälter vorhandenem Feststoff vorgesehen ist. Nicht dargestellt sind die Vorrichtungen für den Weitertransport des ausgetragenen Feststoffes, bei denen es sich beispielsweise um ein Förderband, etc. handeln kann. Die Auslaßöffnung ist seitlich nach unten durch eine die Auslaßöffnung zumindest teilweise umgebende Führungswand 32 fortgesetzt. Durch diese wird der nach unten fallende oder geschobene Feststoff zu dem nicht dargestellten Transportmittel gerichtet.

Ebenso zeigt Fig. 2 Füße 4, auf denen der Sammelbehälter 2 gelagert ist.

Im Sammelbehälter 2 ist entlang dessen Wänden 20, 22, 24, 26 ein Zugmittel 40 geführt, das sich entlang den Wänden bewegt und an den Behälterecken mittels Umlenkmitteln 42, 44, 46, 48 umgelenkt wird. Oberhalb der Umlenkelemente befindet sich jeweils ein Kettenschutz 52, 54, 56, 58, unterhalb von der das jeweilige Umlenkelement 42, 44, 46, 48 sitzt und die als Schutz gegen von oben herunterfallenden Feststoff ist. Bei dem Zugmittel 40 kann es sich beispielsweise um ein Seil oder eine Kette handeln. An dem Zugmittel 40 sitzt ein von diesem mitgeführter Räumer 6, der einen oder mehrere Räumerarme umfaßt, wobei bei der Darstellung von Fig. 1 und 2 lediglich ein Räumerarm dargestellt ist. Der Räumerarm 60 ist flexibel ausgeführt und besteht bei der dargestellten Ausführung aus einer kettenähnlichen Konstruktion mit jeweils in Verbindungsgelenken 64 beweglichen Elementen 62, z.B. Ketten- oder Scharniersegmenten. Der Räumerarm 60 ist am Zugmittel 40 wie erwähnt mit einem Ende befestigt und ist mit dem anderen Ende an einem Drehlager 70 angelenkt. In der Räumerfunktion bewegt sich das behälterseitige Ende des Räumerarms 60 entlang der Behälterwand, wobei der Räumerarm 60 im Verlauf seines Umlaufs um den Lagerpunkt 70 seine Gestalt ändert und unterschiedlich stark gewölbt ist. Ebenso ändert der Räumerarm 60 seine Gestalt in dem Fall, daß er eine höhere Feststoffmenge gebietsweise wegzuräumen hat, wodurch es zu lokal langsamerem Fortbewegen kommt und der Räumer sich an den betreffenden Stellen mehr ausbaucht. Diese Anpassung an die örtlichen Gegebenheiten ergeben sich durch die flexible Ausgestaltung des Räumerarms 60.

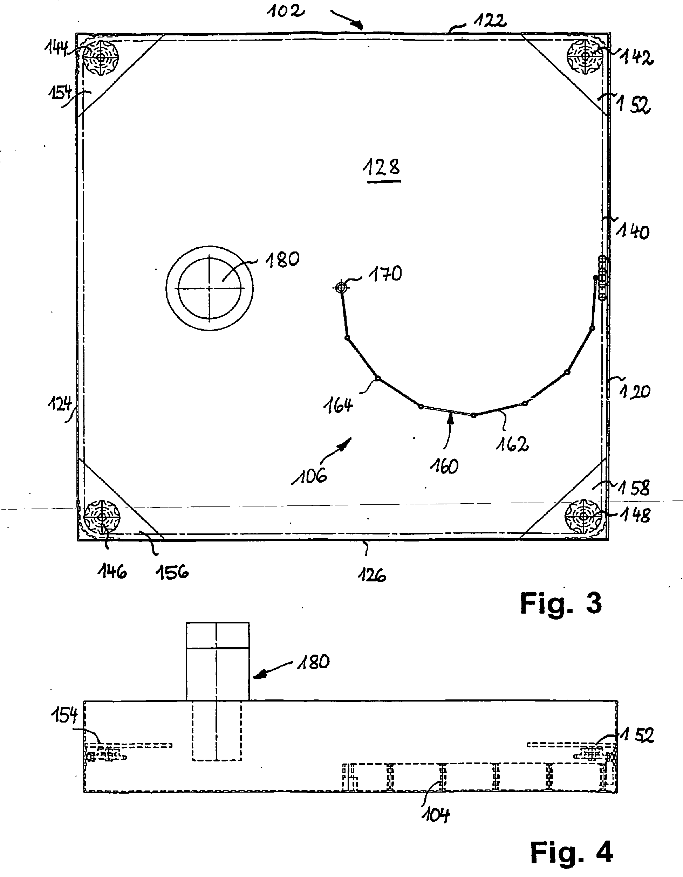

Im folgenden wird das in Fig. 3 und 4 gezeigte Ausführungsbeispiel der Erfindung beschrieben. Der dort dargestellte Sammelbehälter 102 ist ähnlich wie der vorhergehend beschriebene Sammelbehälter 2 und wird daher im wesentlichen nur in bezug auf die abweichenden Konstruktionsmerkmale beschrieben. Die mit dem Sammelbehälter 2 von Fig. 1 und 2 gemeinsamen Merkmale sind mit um 100 erhöhten Bezugszeichen versehen. Der Sammelbehälter 102 ist als Rückpumpstation ausgeführt und weist entsprechend keine Auslaßöffnung, sondern stattdessen eine Pumpe 180 als Austrageinrichtung auf. Die Pumpe 180 reicht bis etwa zur Höhe des zumindest einen Räumerarms 160 hinab. Dieser schiebt den Feststoff bis zur Ansaugöffnung der Pumpe 180, wo er abgesaugt wird. Wenn es zu Feststoffanhaftungen an der Ansaugöffnung, beispielsweise durch Späneknäuel, kommt, werden diese jeweils vom Räumerarm 160 fortgeschoben, so daß die Ansaugöffnung der Pumpe 180 wieder freigesetzt ist. Ganz offensichtlich können statt nur der einen dargestellten Pumpe 180 auch weitere Pumpen vorgesehen werden.

## Patentansprüche

1. Sammelbehälter (102) für trockene Schüttgüter oder flüssige Medien mit Feststoffanteil, umfassend einen Hehälterboden (128) und eine Behälterwand (122, 124, 126, 128), eine Einrichtung für den Feststoffaustrag (30; 180) sowie einen Räumer (160) mit zumindest einem Räumerarm (160), der den Feststoff der Austrageinrichtung ( 180) zuführt und entlang der Behälterwand ( 122, 124, 126, 128) verfahrbar ist, wobei der zumindest eine Räumerarm ( 160) flexibel ist und an eneim zugmittel (140) befestigt ist sowie an dem der Behälterwand ( 122, 124, 126, 128) entgegengesetzten Ende innerhalb des Behälters drehbar gelagert ist, und über eine Längserstreckung eine unterschiedliche Steifigkeit aufweist, derart, dass die Wölbung des Räumerarms beeinflusst und dadurch der Ort des Schüttgut- bzw. Feststofftransports festgelegt ist dadurch **ge-kennzeichnet**, dass die Austrageinrichtung ( 180) eine oder mehrere Pumpen sind, die außerhalb des Drehlagers (170) vorgesehen sind, wobei die Pumpe oder Pumpen entweder bis etwa zur Höhe des Zumindest einen Räumerarms (160) hinabreichen oder die Pumpe in einer Vertiefung des Behälter bodens versenkt ansaugt.

2. Sammelbehälter (102) nach Anspruch 1, dadurch g e-**kennzeichnet**, daß das Zugmittel (140) ein Seil oder eine Kette ist.

3. Sammelbehälter (102) nach Ansprüch 2, dadurch g**ekennzeichnet**, daß eine Spannvorrichtung für das Zugmittel (140) vorgesehen ist.

4. Sammelbehälter (102) nach einem der Ansprüche 1 bis 3, **dadurch gekennzeichnet, daß** der Räumerarm (160) aus flexibel miteinander verbundenen Elementen ( 162) besteht.

5. Sammelbehälter nach Anspruch 4, **dadurch gekennzeichnet, daß** der Räumerarm aus einem flexiblen Strangkörper besteht.

## Claims

1. Collecting vessel (102) for dry bulk materials or liquid media having a solids content, comprising a vessel bottom (128) and a vessel wall (122, 124, 126, 128), a device for the discharge of solids (30; 180), and a scraper (160) having at least one scraper arm (160) which supplies the solids to the discharge device (180) and is movable along the vessel wall (122, 124, 126, 128), wherein the at least one scraper arm (160) is flexible and is attached to a pulling means (140), and is mounted on the end opposite the vessel wall (122, 124, 126, 128) so as to be able to rotate inside the vessel and has a different level of rigidity over its longitudinal extension such that the curvature of the scraper arm is influenced and thereby the location of the bulk material or solids transportation is fixed, **characterised in that** the discharge device (180) is one or several pumps which are provided outside the rotary bearing (170), wherein the pump or pumps either reach down to about the height of the at least one scraper arm (160) or the pump effects suction being countersunk in a recess of the vessel bottom.

2. Collecting vessel (102) as claimed in claim 1, **characterised in that** the pulling means (40; 140) is a cable or a chain.

3. Collecting vessel (102) as claimed in claim 2, **characterised in that** a tensioning device is provided for the pulling means (140).

4. Collecting vessel (102) as claimed in any one of claims 1 to 3, **characterised in that** the scraper arm (160) consists of elements (162) which are flexibly interconnected.

5. Collecting vessel as claimed in claim 4, **characterised in that** the scraper arm consists of a flexible extrusion body.

## Revendications

1. Récipient de collecte (102) pour matières sèches en vrac ou substances liquides contenant des matières solides comprenant un fond de récipient (128) et une paroi de récipient (122, 124, 126, 128), un dispositif pour l'évacuation de matières solides (30 ; 180) ainsi qu'un racleur (160) présentant au moins un bras de racleur (160), lequel achemine les matières solides vers le dispositif d'évacuation (180) et lequel peut être déplacé le long de la paroi du récipient (122, 124, 126, 128), dans lequel le au moins un bras de racleur (160) est flexible et fixé à un moyen de traction (140) et logé de manière rotative, au niveau de l'extrémité opposée de la paroi de récipient (122, 124, 126, 128), à l'intérieur du récipient et il présente, sur son extension en longueur, une rigidité variable, si bien que le cintrage du bras de racleur en soit influencé et que le lieu du transport des matières en vrac ou des matières solides en soit déterminé, **caractérisé en ce que** le dispositif d'évacuation (180) consiste en une ou plusieurs pompes prévues à l'extérieur du palier rotatif (170), la ou les pompes s'étendant vers le bas jusqu'à environ la hauteur du au moins un bras de racleur (160) ou la pompe étant logée dans un évidement du récipient d'où elle aspire.

2. Récipient de collecte (102) selon la revendication 1, **caractérisé en ce que** le moyen de traction (140) est une corde ou une chaîne.

3. Récipient de collecte (102) selon la revendication 2, **caractérisé en ce qu'**un dispositif de serrage est prévu pour le moyen de traction (140).

4. Récipient de collecte (102) selon l'une quelconque des revendications 1 à 3, **caractérisé en ce que** le bras de racleur (160) est composé d'éléments (162) reliés les uns aux autres de manière flexible.

5. Récipient de collecte selon la revendication 4, **caractérisé en ce que** le bras de racleur est composé d'un corps de forme allongée flexible.
